# EUROPÄISCHE PATENTSCHRIFT

(11) **EP 0 955 237 B1**
(45) Veröffentlichungstag und Bekanntmachung des Hinweises auf die Patenterteilung: **02.06.2004**
(21) Anmeldenummer: 99108450.0
(22) Anmeldetag: 30.04.1999
(51) Int. Cl.: B64G 1/44, H01L 31/045, F16G 9/04, D07B 5/00

(54) **Seilverbindung zur Solarpanel-Entfaltung bei Satelliten**
Cable connection for solar panel deployment on satellites
Câble de connection pour le déploiement des panneaux solaires sur des satellites

(30) Priorität: 05.05.1998 DE 19819955
(43) Veröffentlichungstag der Anmeldung: 10.11.1999
(73) Patentinhaber: EADS Astrium GmbH, 81663 München (DE)
(72) Erfinder: Bauer, Karl, 83564 Soyen (DE)
(74) Vertreter: Ulrich, Thomas

(56) Entgegenhaltungen:
- EP-A- 0 198 567
- EP-A- 0 550 784
- EP-A- 0 858 946
- EP-A- 0 889 534
- DE-A- 2 717 426
- PATENT ABSTRACTS OF JAPAN vol. 014, no. 053 (C-0683), 31. Januar 1990 (1990-01-31) & JP 01 280087 A (MITSUBISHI ELECTRIC CORP), 10. November 1989 (1989-11-10)

## Beschreibung

### TECHNISCHES GEBIET

Die Erfindung betrifft einen faltbaren Solargenerator, insbesondere für Satelliten, nach dem Oberbegriff des Anspruchs 1.

### STAND DER TECHNIK

Faltbare Solargeneratoren an Bord von Satelliten, die zur Energieversorgung für die Satellitensysteme vorgesehen sind, weisen u. a. mehrere Solarpanels auf, die untereinander über Scharniergelenke drehbar verbunden sind und mittels Seilverbindungen von einem zentralen Stellantrieb relativ zueinander verschwenkt werden können. Die Solarpanels sind beim Transport von der Erde in die Umlaufbahn des Satelliten zusammengefaltet und werden im Weltraum entfaltet, wobei der Öffnungsvorgang gleichmäßig und das Einrasten der Solarpanels in ihrer entfalteten Stellung verhältnismäßig genau zu demselben Zeitpunkt zu erfolgen hat, um die Belastungen der tragenden Strukturteile möglichst gering zu halten. Um ein nahezu gleichzeitiges Einrasten der Solarpanels in ihrer entfalteten Stellung zu gewährleisten, ist ein Mechanismus zur Entfaltung der Solarpanels vorgesehen, bei dem die Solarpanels jeweils synchron zueinander von ihrer Anfangsstellung aus entfaltet werden. Der synchrone Entfaltungsvorgang wird mittels mehrerer, von einem am Satelliten angebrachten Stellmotor angetriebener Seilschlaufen ("closed cabel loop") erreicht. Die Seilschlaufen sind beim Stand der Technik aus Stahlseil gebildet und übertragen mittels Umlenkrollen oder Laufräder die Winkelbewegungen von einem Solarpanel auf das andere. Die vollkommen synchrone Entfaltung ist erforderlich, da dabei die auftretenden Kräfte auf die Scharniere, Beschläge und Solarpanels am geringsten sind. Diese Anforderung wird durch eine möglichst steife Stahlkonstruktion erfüllt, die durch einen entsprechend großen Querschnitt des verwendeten Stahlseils erreicht wird. Dadurch hat jedoch die heute verwendete Stahlseilverbindung den Nachteil, daß sie ein verhältnismäßig großes Gewicht aufweist. Ein weiterer Nachteil des Stands der Technik ist, daß zur Kompensation der bei der Seilschlaufe auftretenden Wärmedehnung die Seilschlaufe entsprechend vorgespannt werden muß, um bei höheren Temperaturen ein Durchhängen der Seilschlaufe zu vermeiden. Diese erhöhte Vorspannung belastet jedoch die Scharniere und die tragende Struktur der Solarpanels, so daß auch diese Teile massiver ausgelegt werden müssen. Auch dadurch ergibt sich also eine in Bezug auf das Gewicht ungünstige Konstruktion der Solarpanels.

Die DE 28 18 549 A1 betrifft Kabel, bei denen die thermisch bedingten Längenänderungseffekte so steuerbar sind, dass Kabel erhalten werden, die sich bei verschiedenen Temperaturen entweder ausdehnen, zusammenziehen oder im wesentlichen eine konstante Länge beibehalten. Dabei sind die Fasern des Kabels spiralförmig gewickelt, d.h. gezwimt, und in einem Bindematerial eingebettet. Die spiralförmige Wicklung der Fasern entlang der Kabellängsachse ist aufwendig. Weiterhin ist die Zugbeanspruchung einer einzelnen spiralförmig gewickelten Faser nicht optimal im Gegensatz zu einer unidirektional orientierten Faser.

Die EP 0 889 534 A1 (Stand der Technik gemäß Artikel 54(3) EPÜ; entspricht DE 197 28 844 A1) offenbart entsprechend dem Oberbegriff des Anspruchs 1 einen faltbaren Solargenerator mit mehreren für einen Entfaltungsvorgang relativ zueinander verschwenkbaren Solarpanels und mindestens einer aus einem endlosen Drahtseils gebildeten geschlossenen Seilschlaufe zur Übertragung einer Drehbewegung zur synchronen Entfaltung der Solarpanels, wobei die geschlossene Seilschlaufe von zwei Umlenkrollen aufgespannt ist. Die Seilschlaufe bildet ein Seilgetriebe zur Bewegung der an einem Raumfahrzeug mittels Scharniergelenken ziehharmonikaartig gefalteten Panels mit Solarzellen. Wenigstens einer der beiden geraden Abschnitte des endlosen Drahtseils zwischen zwei Seilscheiben der Panels ist mit einem Kunststoffmantel versehen, der mit dem Drahtseil fest verbunden ist, z.B. durch Kleben. Das Drahtseil besteht üblicherweise aus einer nicht rostenden Stahllegierung. Durch diese Maßnahmen soll die Längenänderung des Drahtseils an die Längenänderung der Panels angepasst werden, so dass bei einer Temperaturänderung die Längenänderung des Drahtseils der Längenänderung der Panels entspricht, d.h. das Drahtseil der Längenänderung der Panels folgt. Diese Lösung ermöglicht es nicht, das Stahlseil formschlüssig am vorzugsweise faserverstärkten Kunststoffmantel anzubinden. Dadurch ergibt sich der Nachteil, dass sich infolge der thermischen Belastung, insbesondere an den Enden des Kunststoffmantels, starke Spannungsspitzen auswirken, so dass dort der Kunststoff vom Stahlseil delaminiert und in seiner Steifigkeit gemindert wird. Dies steht einem zuverlässigen Entfaltungsvorgang des Solargenerators entgegen.

### DARSTELLUNG DER ERFINDUNG

Aufgabe der vorliegenden Erfindung ist es daher, einen gattungsgemäßen Solargenerator mit einer Seilverbindung zur Solarpanelentfaltung bei Satelliten zu schaffen, die hochzuverläßlich eine synchrone Entfaltung der Solarpanels gewährleistet und weiterhin in Bezug auf das Gewicht der gesamten Solarpanelanordnung eine günstige Bauweise derselben ermöglicht.

Diese Aufgabe wird mit einem Solargenerator mit den Merkmalen des Anspruchs 1 gelöst. Weitere Ausführungsformen des erfindungsgemäßen Solargenerators sind in den Unteransprüchen angegeben.

Bei dem erfindungsgemäßen Solargenerator weist das Seil der Seilverbindung eine ausreichend hohe Steifigkeit auf. Aufgrund der Tatsache, dass bei dem erfindungsgemäßen Solargenerator der überwiegende Teil der geschlossenen Seilschlaufe zwischen den die geschlossene Seilschlaufe aufspannenden Umlenkrollen aus wärmedehnungsneutralem Material gebildet ist, tritt gleichzeitig bei dem Seil keine oder eine nur sehr geringe Wärmedehnung gegenüber der Struktur des Solarpanels auf. Dadurch ist nur eine geringe Vorspannung des Seils erforderlich, um eine im späteren Einsatz auftretende Wärmedehnung zu kompensieren, so daß sowohl die Strukturteile als auch die zum Stellsystem gehörenden Teile des Solargenerators kleiner dimensioniert werden können. Dadurch ist die erfindungsgemäße Lösung in Bezug auf das Gewicht der gesamten Solarpanel-Anordnung und damit das Gewicht des Solargenerators vorteilhaft gegenüber dem Stand der Technik. Ein weiterer Vorteil der Erfindung besteht darin, daß bei dem erfindungsgemäßen Solargenerator die Seilverbindung problemlos und zuverlässiger montierbar ist als die Seilverbindung der Solargeneratoren nach dem Stand der Technik, da die Seilverbindung des erfindungsgemäßen Solargenerators lediglich eine Vorspannung aufweist, die weitgehend unabhängig von der Umgebungstemperatur bei der Montage ist.

Ist der erfindungsgemäße Solargenerator mit einer Seilverbindung aus wärmedehnungsneutralem Stahl ausgestattet, beispielsweise Invar-Stahl, ist zwar die Seilverbindung selbst in Bezug auf das Gewicht nicht vorteilhaft gegenüber der Seilverbindung eines Solargenerators nach dem Stand der Technik, da der wärmedehnungsneutrale Stahl gegenüber dem heute verwendeten hochlegierten Stahl geringere Festigkeits- und Steifigkeitswerte aufweisen kann.Die Seilverbindung mit wärmedehnungsneutralem Stahl weist in diesem Fall deshalb einen größeren Querschnitt und somit auch ein größeres Gewicht als die Seilverbindung mit dem heute verwendeten hochlegierten Stahl auf. Jedoch ergeben sich insgesamt gewichtsmäßige Vorteile für die gesamte Solarpanel-Anordnung des Solargenerators nach der Erfindung, da die tragende Struktur sowie das gesamte Stellsystem insgesamt leichter gebaut werden kann als dies beim Stand der Technik der Fall ist.

Bei der Verwendung von wärmedehnungsneutralem Faserverbundwerkstoff (FVW), zumindest für Teile der Seilverbindung des erfindungsgemäßen Solargenerators, kann jedoch auch die Seilverbindung selbst hinsichtlich des Gewichts günstiger gebaut werden als die Seilverbindung der Solargeneratoren nach dem Stand der Technik. Somit ist eine gewichtsgünstigere Konstruktion des gesamten erfindungsgemäßen Solargenerators realisierbar.

Im folgenden wird die Erfindung an Hand der Figuren beschrieben.

### KURZE BESCHREIBUNG DER ZEICHNUNGEN

Es zeigen:
- Figur 1: eine schematische Darstellung von drei äußersten Solarpanels eines erfindungsgemäßen Solargenerators in perspektivischer Ansicht;
- Figur 2: eine Draufsicht auf eine Seilschlaufe (closed cable loop-CCL) eines Solargenerators nach dem Stand der Technik;
- Figur 3: eine Draufsicht auf eine Seilschlaufe (CCL) mit Faserverbundwerkstoff (FVW)-Teilen eines erfindungsgemäßen Solargenerators;
- Figur 4: einen Schnitt durch eine Seilschlaufe eines erfindungsgemäßen Solargenerators, die aus einem mit Stahlseil umwickelten FVW-Stab gebildet ist;
- Figur 5: eine Draufsicht auf eine erfindungsgemäße Seilschlaufe des erfindungsgemäßen Solargenerators, mit Befestigungsschlaufen am FVW-Teil;
- Figur 6: eine vergrößerte perspektivische Darstellung der Befestigungsschlaufe nach der Figur 5.

### DARSTELLUNG VON BEVORZUGTEN AUSFÜHRUNGSBEISPIELEN

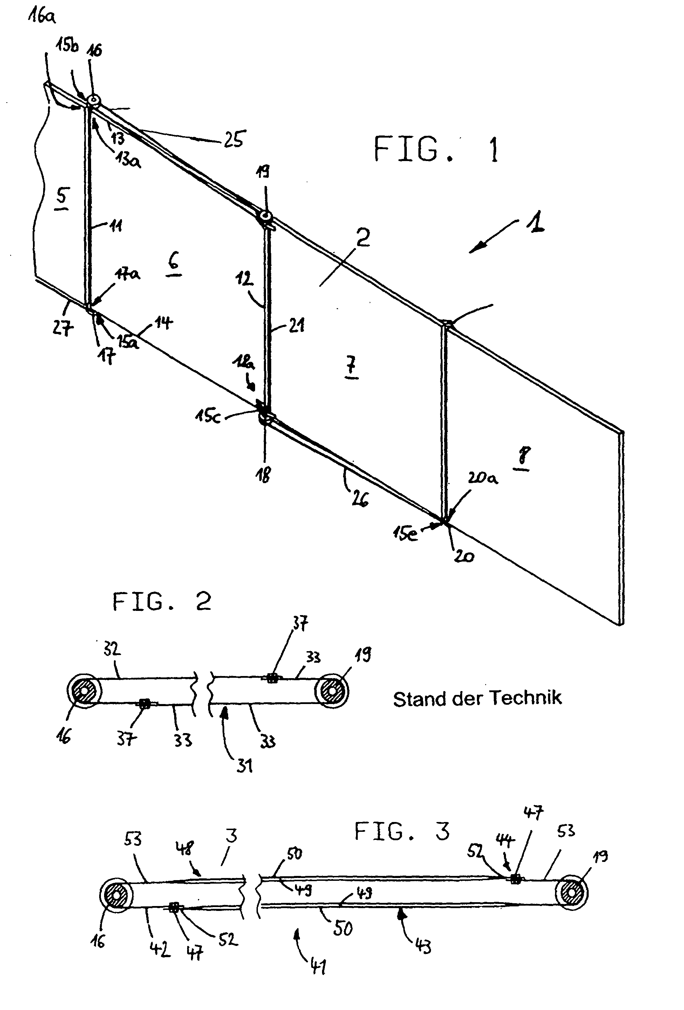

In der Figur 1 ist ein Teil eines für einen Satelliten vorgesehenen erfindungsgemäßen Solargenerators 1 mit mehreren, in einer Reihe angeordneten Solarpanels 5, 6, 7, 8 dargestellt. Jedes Solarpanel 5, 6, 7, 8 ist im wesentlichen in Form einer rechteckförmigen Platte gestaltet. So weist das Solarpanel 6 eine erste Kante 11 und eine zweite Kante 12 auf, an denen jeweils das benachbarte Solarpanel 5 bzw. 7 angeordnet ist, sowie eine obere freie Kante 13 und untere freie Kante 14, die im wesentlichen parallel zueinander verlaufen und orthogonal zu der ersten 11 und zweiten Kante 12 angeordnet sind. Das Solarpanel 6 ist mittels Scharnieren 15a, 15b drehbar gegenüber dem näher am Satelliten gelegenen Solarpanel 5 angeordnet. An der in der Figur 1 gesehen oberen, dem Solarpanel 6 zugewandten Ecke 16a des Solarpanels 5 ist eine Umlenkrolle 16 drehbar an dem Solarpanel 5 angeordnet. Weiterhin ist an der in der Figur 1 gesehen unteren, dem Solarpanel 5 zugewandten Ecke 17a eine Umlenkrolle 17 drehfest an dem Solarpanel 6 angeordnet. An der der Ecke 17a gegenüberliegenden, durch die untere frei Kante 14 und die zweite Kante 12 des Solarpanels 6 gebildeten Ecke 18a ist analog zur Umlenkrolle 16 eine Umlenkrolle 18 drehbar am Solarpanel 6 angeordnet. Weiterhin ist an der Oberseite des Solarpanels 7 eine Umlenkrolle 19 angeordnet, und zwar an der oberen, dem Solarpanel 6 zugewandten Ecke 19a des Solarpanels 7. Die Umlenkrolle 19 hat eine im Vergleich zur Umlenkrolle 17 des Solarpanels 6 analoge Funktion und ist wie diese drehfest am Solarpanel 7 angeordnet. Weiterhin ist analog zur Umlenkrolle 19 eine Umlenkrolle 20 drehfest am Solarpanel 8 angeordnet. Die Umlenkrolle 20 ist an der in der Figur 1 gesehen unteren freien Kante des Solarpanels 8 angeordnet, und zwar im Bereich der unteren, dem Solarpanel 7 zugewandten Ecke 20a.

Die Umlenkrolle 16 und die Umlenkrolle 19 spannen eine Seilschlaufe 25 auf, die entsprechend der Anordnung der Umlenkrollen 16, 19 entlang der jeweiligen Oberseite der Solarpanel 5, 7, und zwar parallel zur oberen freien Kante 13 des Solarpanels 6 verläuft. In entsprechender Weise spannen die Umlenkrolle 18 und die Umlenkrolle 20 eine Seilschlaufe 26 auf, die parallel zu der in der Figur 1 gesehen unteren freien Kante des Solarpanels 7 verläuft. In analoger Weise ist eine sich parallel zu der unteren freien Kante des Solarpanels 5 erstreckende Seilschlaufe 27 vorgesehen, die von der Umlenkrolle 17 und einer analog zur Umlenkrolle 18 angeordneten Umlenkrolle aufgespannt wird.

Beim Betrieb des Solargenerators 1 verschwenkt ein nicht gezeigter Stellantrieb das dem Satelliten nächstgelegene Solarpanel mittels einer in entsprechender Weise angeordneten Seilschlaufe oder anderer Übertragungselemente. Diese Schwenkbewegung des Solarpanels wird mittels der beschriebenen Anordnung von Umlenkrollen und Seilschlaufen von einem Solarpanel auf das jeweils benachbarte, dem Satelliten fernliegendere Solarpanel übertragen. Beispielsweise in Bezug auf die Solarpanels 6, 7 dreht sich die Seilschlaufe 27 aufgrund der Schwenkbewegung eines dem Solarpanel 5 benachbarten und von diesem aus gesehen dem Satelliten näher gelegenen Solarpanel, und zwar in der Figur 1 von oben gesehen entgegen dem Uhrzeigersinn. Da die Seilschlaufe 27 an ihrem dem Satelliten fernliegenden U-förmigen Ende von der drehfest an dem Solarpanel 6 angebrachten Umlenkrolle 17 aufgespannt wird, wird das Solarpanel 6 aufgrund der Bewegung der Seilschlaufe 27 sowie der drehbaren Verbindung der Solarpanel 5 und 6 mittels der Scharniere 15a, 15b gegenüber dem Solarpanel 5 verschwenkt, und zwar ebenfalls in der Figur 1 von oben gesehen entgegen dem Uhrzeigersinn. Durch die Schwenkbewegung des Solarpanels 6 wird auch die Seilschlaufe 25 von der oberen freien Kante 13 des Solarpanels 6 gegenüber dem Solarpanel 5 verschwenkt. Da die Seilschlaufe 25 an ihrem dem Satelliten zugewandten, U-förmigen Ende von der dehbar am Solarpanel 5 angebrachten Umlenkrolle 16 aufgespannt wird, wird die Umlenkrolle 16 in der Figur 1 von oben gesehen entgegen dem Uhrzeigersinn gedreht. Dadurch führt also die Seilschlaufe 25 eine Bewegung aus, die in der Figur 1 von oben gesehen entgegen dem Uhrzeigersinn verläuft. Dadurch wird wiederum die Umlenkrolle 19 entgegen dem Uhrzeigersinn relativ zum Solarpanel 6 gedreht, da die Umlenkrolle 19 drehfest mit dem Solarpanel 7 verbunden ist und dieses über die Scharniere 15 c, 15d drehbar gegenüber dem Solarpanel 6 angeordnet ist. Somit bewirkt die Bewegung der Seilschlaufe 25 eine Schwenkbewegung des Solarpanels 7 gegenüber dem Solarpanel 6. Auf analoge Weise bewirkt die Seilschlaufe 26 eine Schwenkbewegung des Solarpanels 8 gegenüber dem Solarpanel 7. Durch die beschriebene Anordnung von Solarpanels zusammen mit entsprechenden Seilschlaufen wird gewährleistet, daß sich die Solarpanels 5, 6, 7, 8 des Solargenerators 1 aufgrund einer Stellbewegung eines Stellantriebs gleichmäßig entfalten.

Für die voranstehend an Hand der in der Figur 1 beschriebene Anordnung des Solarpanels mit Umlenkrollen und Seilschlaufen werden im folgenden Ausführungsbeispiele für die Umlenkrollen 16, 19 und die von diesen aufgespannten Seilschlaufe 25 beschrieben. An demselben Solargenerator 1 können entlang dessen Längserstreckung eine oder mehrere Anordnungen eines Ausführungsbeispiels oder Kombinationen mehrerer Ausführungsbeispiele vorgesehen sein. Auch können an einem erfindungsgemäßen Solargenerator 1 zumindest eine erfindungsgemäße Anordnung von Umienkrollen und Seifschlaufen angebracht sein, die mit ebensolchen Anordnungen nach dem Stand der Technik kombiniert sind.

Die Figur 2 zeigt die Umlenkrollen 16, 19, die eine geschlossene Seilschlaufe 31 eines Solargenerators nach dem Stand der Technik aufspannen. Die geschlossene Seilschlaufe 31 wird üblicherweise aus zwei verseilten Stahlseilen 32, 33 gebildet, die an ihren jeweiligen sich überlappenden Enden mittels Quetschklemmen 37 nach dem Stand der Technik zusammengehalten werden.

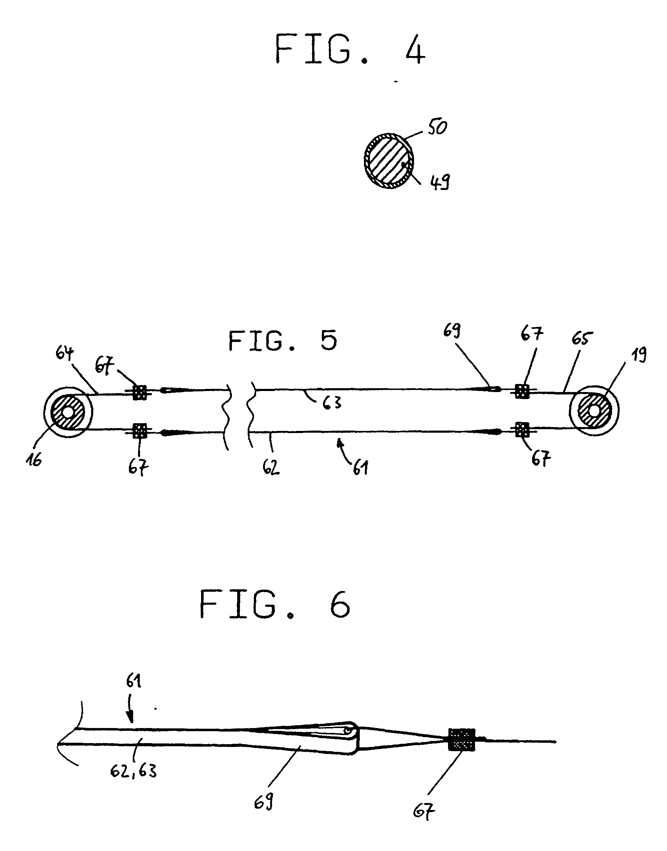

Die Figuren 3 bis 6 zeigen verschiedene Ausführungsformen von geschlossenen Seilschlaufen des erfindungsgemäßen Solargenerators. Die Figur 3 zeigt eine von den Umlenkrollen 16, 19 aufgespannte geschlossene Seilschlaufe 41, die aus zwei Seilstücken 42, 43 gebildet ist. Ein Ende der Seilstücke 42, 43 überlappt sich mit dem entsprechenden Ende des jeweils anderen Seilstücks 42, 43, wobei die beiden Seilstücke 42, 43 in diesem Überlappungsbereich 44 mittels Quetschklemmen 47 nach dem Stand der Technik zusammen gehalten werden. Jedes Seilstück 42, 43 weist einen Bereich 48 auf, in dem ein wärmedehnungsneutraler Faserverbundwerkstoff (FVW)-Stab 49 in einem nach dem Stand der Technik gebildeten Seilmantel 50 eingeflochten ist, der vorzugsweise aus Stahl gebildet ist. Der Seilmantel 50 erstreckt sich über beide Enden des VFW-Stabs 49 hinaus und bildet auf der einen Seite des FVW-Stabs 49 einen kürzeren Seilbereich 52 und an dem anderen Ende des FVW-Stabs 49 einen längeren Seilbereich 53, die jeweils vorzugsweise aus Stahl gebildet sind. Der längere Seilbereich 53 weist eine Länge auf, bei der dieser Stahlseilbereich 53 noch um die entsprechende Umlenkrolle 16, 19 herum läuft und anschließend den Überlappungsbereich 44 ausbilden kann. Bei dem in der Figur 3 dargestellten Ausführungsbeispiel der erfindungsgemäßen geschlossenen Seilschlaufe 41 sind pro Seilschlaufe 41 zwei Quetschklemmen 47 erforderlich, um die Seilstücke 42, 43 zusammen zu halten.

Figur 4 zeigt einen Querschnitt durch den mit dem Seilmantel 50 umwickelten FVW-Stab 49. Dabei weist der FVW-Stab 49 einen runden Querschnitt auf. Alternativ dazu könnte jedoch auch der FVW-Stab 49 eine andere geeignete Querschnittsform haben.

Die in den Figuren 5 und 6 dargestellte geschlossene Seilschlaufe 61 wird aus einem ersten FVW-Teil 62, einem zweiten FVW-Teil 63, einem ersten Stahlseil 64 und einem zweiten Stahlseil 65 gebildet. Dabei ist jeweils ein Stahlseil 64, 65 zwischen dem ersten FVW-Teil 62 und dem zweiten FVW-Teil 63 angeordnet und liegt in einem Bereich an einer Umlenkrolle 16, 19 an, um dort jeweils ein U-förmiges Ende der Seilschlaufe 61 auszubilden. Wie in Figur 6 vergrößert dargestellt ist, ist jedes Ende des ersten und zweiten Stahlseils 64, 65 mittels Quetschklemmen 67 zu jeweils einer Schlinge 68 ausgebildet. Das im Bereich der jeweiligen Schlinge 68 gelegene Ende des entsprechenden FVW-Teils oder FVW-Bands 62, 63 ist zu einer Befestigungsschlaufe 69 ausgebildet, durch welche die entsprechende Stahlseil-Schlinge 68 hindurch verläuft. Im Bereich der Befestigungsschlaufe 69 kann die Schlinge 68 mit einer Halterung 68a, vorzugsweise in Form einer Rolle, versehen sein. Durch die Anordnung aus Schlinge 68, Quetschklemme 67 und Befestigungsschlaufe 69 werden also das erste 62 und zweite FVW-Teil 63 mit den jeweiligen Stahlseilen 64, 65 verbunden. Jedes FVW-Teil 62, 63 kann eine Ummantelung beispielsweise aus geflochtenem Stahlseil aufweisen oder kann ohne Ummantelung ausgebildet sein.

Bei dem erfindungsgemäßen Solargenerator ist also der überwiegende Teil der geschlossenen Seilschlaufe 41, 61, d.h. zumindest der über den halben Abstand zwischen den die Seilschlaufe 41, 61 aufspannenden Umlenkrollen 16, 19 verlaufende Teil, aus wärmedehnungsneutralem Material gestaltet. In der bevorzugten Ausführungsform erstreckt sich der Teil, der aus Stahlseil gebildet ist, insbesondere über den Bereich der Seilschlaufe 41, 61, der durch die Umlenkrollen 16, 19 der Biegung unterworfen ist. In einer alternativen Ausführungsform ist die Seilschlaufe 41, 61 entlang ihrer gesamten Längserstreckung aus wärmedehnungsneutralem Material gebildet. Vorzugsweise ist als wärmedehnungsneutrales Material ein FVW und insbesondere eine Kohlenfaserkunststoff (CFK) vorgesehen, der überwiegend eine Faserrichtung entlang der Zugbelastung aufweist. Diese FVW- bzw. CFK-Struktur ist somit weitgehend wärmedehnungsneutral wie die Solarpanel-Anordnung des Solargenerators 1. Da CFK einen deutlich höheren Elastizitäts-Modul als ein Stahlseil besitzt, wird mit der erfindungsgemäßen Seilschlaufe 41, 61 bei gleichem Seilschlaufenquerschnitt eine höhere Steifigkeit der Seilschlaufe in Zugrichtung erreicht, als dies bei der Seilschlaufe nach dem Stand der Technik der Fall ist. Der Figur 3 ist entnehmbar, daß die in Längsrichtung der geschlossenen Seilschlaufe 41 verlaufenden Teile der längeren Stahlseilbereiche 53 sowie der kürzeren Seilbereiche 52 nur einen verhältnismäßig geringen Anteil der Längserstreckung der geschlossenen Seilschlaufe 41 ausmachen, so daß diese nur einen sehr geringen Beitrag zur Wärmedehnung der gesamten geschlossenen Seilschlaufe 41 leisten, der bei entsprechender Ausführung der Längen des FVW-Stabs 49, des kürzeren Seilbereichs 52 sowie des längeren Seilbereichs 53 vemachlässigbar sein kann.

Die Vorspannung der geschlossenen Seilschlaufe 41 erfolgt über die Quetschklemmen 47, wie dies auch im Stand der Technik vorgesehen ist.
Der in der Figur 3 gezeigte FVW-Stab 49 ist mit dem Seilmantel 50 umhüllt. Da dieser Seilmantel 50 vorzugsweise ein geflochtenes Stahlseil ist, in deren Querschnittsmitte der FVW-Stab 49 eingeflochten ist, ist der FVW-Stab 49 in ausreichendem Maße in dem Seilmantel 50 fixiert. Der Seilmantel 50 steht jederzeit unter Zug, wobei sich dieser im Querschnitt aufgrund der Zugbelastung zusammenzieht und somit den FVW-Stab 49 zuverlässig aufgrund der Einschnürung des Seilmantels 50 fixiert. Wenn sich die geschlossene Seilschlaufe 41 abkühlt, strebt der den FVW-Stab 49 umhüllende Seilmantel 50 danach, sich in der Länge im Bereich des FVW-Stabs 49 zusammenzuziehen. Dies wird jedoch vom FVW-Stab 49 verhindert, so daß der Schrumpf des Seilmantels 50 zu einem Dehnen der durch das Seilmantel 50 gebildeten Hülle führt. Die Querschnitte des FVW-Stabs 49 und des Seilmantels 50 sind vorzugsweise so vorgesehen, daß das Mehrgewicht des FVW-Stabs 49 durch einen verringerten Querschnitt des Seilmantels 50 kompensiert wird.

Grundsätzlich kann nach der Erfindung statt des FVW-Stabs 49 auch ein wärmedehnungsneutraler Stahl, z. B. Invar-Stahl, verwendet werden. Da dieser jedoch im Vergleich zum heute verwendeten hochlegierten Stahl geringe Festigkeit- und Steifigkeitswerte aufweist, müßte dieser zur Erreichung der nötigen Steifigkeit des Seilquerschnitts mit einem entsprechend großen Querschnitt und dadurch mit einem größeren Gewicht ausgelegt werden, als dies mit dem heute verwendeten hochlegierten Stahl der Fall ist. Dennoch hat die Ausführungsform mit dem wärmedehnungsneutralen Stahl den Vorteil, daß die Wärmedehnung der mit diesem gebildeten geschlossenen Seilschlaufe 41 vemachlässigbar ist und somit die Struktur des Solargenerators 1 nicht so stark wie beim Stand der Technik belastet. Dadurch wird insgesamt eine gewichtsgünstigere Konstruktion des Solargenerators 1 erreicht.

Die Seilschlaufe des erfindungsgemäßen Solargenerators kann aus zwei Seilstücken 42, 43, aus ein oder mehreren Stahlseilen 64, 65, sowie aus einem oder mehreren wärmedehnungsneutralen Teilen gestaltet sein, die vorzugsweise aus wärmedehnungsneutralen Stahl oder aus FVW bzw. CFK gebildet ist.

In einer alternativen Ausführungsform kann auch die gesamte Seilschlaufe 31, 41, 61 des erfindungsgemäßen Solargenerators aus FVW oder wärmedehnungs-neutralem Stahl gebildet sein.

Auch kann die gesamte Seilschlaufe 31, 41, 61 aus weniger Teilen als beschrieben, insbesondere aus einem Teil, hergestellt sein.

### Bezugszeichenliste

Es bezeichnen:
- 1: Solargenerator

- 5: Solarpanel
- 6: Solarpanel
- 7: Solarpanel
- 8: Solarpanel

- 11: Erste Kante von 6
- 12: Zweite Kante von 6
- 13: Obere freie Kante von 6
- 14: Untere freie Kante von 6
- 15a: Scharnier
- 15b: Scharnier
- 16: Umlenkrolle
- 16a: Ecke von 5
- 17: Umlenkrolle
- 17a: Ecke von 5
- 18a: Ecke von 6
- 18: Umlenkrolle
- 19: Umlenkrolle
- 19a: Ecke von 7
- 20: Umlenkrolle
- 20a: Ecke von 8

- 25: Seilschlaufe
- 26: Seilschlaufe

- 31: Geschlossene Seilschlaufe (nach Stand der Technik)
- 32: Stahlseil (nach Stand der Technik)
- 33: Stahlseil (nach Stand der Technik)
- 37: Quetschklemmen (nach Stand der Technik)

- 41: Geschlossene Seilschlaufe
- 42: Seilstück von 41
- 43: Seilstück von 41
- 44: Überlappungsbereich von 42, 43
- 45: -
- 46: -
- 47: Quetschklemmen
- 48: Bereich von 41 aus wärmedehnungsneutralem Material
- 49: Wärmedehnungsneutrale Faserverbundwerkstoff-Stäbe

- 50: Seilmantel
- 51: -
- 52: Kürzerer Seilbereich von 50
- 53: Längerer Seilbereich von 50

- 61: Geschlossene Seilschlaufe
- 62: Erster Faserverbundwerkstoff-Teil von 61
- 63: Zweiter Faserverbundwerkstoff-Teil von 61
- 64: Stahlseil
- 65: Stahlseil
- 66: -
- 67: Quetschklemmen
- 68: Stahlseil-Schlinge
- 68a: Halterung
- 69: Befestigungsschlaufe

## Patentansprüche

1. Faltbarer Solargenerator (1) mit mehreren für einen Entfaltungsvorgang relativ zueinander verschwenkbaren Solarpanels (5, 6, 7, 8) und mindestens einer geschlossenen Seilschlaufe (41, 61) zur Übertragung einer Drehbewegung zur synchronen Entfaltung der Solarpanels (5, 6, 7, 8), wobei die geschlossene Seilschlaufe (41, 61) von zwei Umlenkrollen (16, 19; 18, 20) aufgespannt ist,
**dadurch gekennzeichnet, dass**
zumindest der überwiegende Teil der geschlossenen Seilschlaufe (41, 61) zwischen den die geschlossene Seilschlaufe (41, 61) aufspannenden Umlenkrollen (16, 19; 18, 20) aus wärmedehnungsneutralem Material gebildet ist.

2. Solargenerator (1) nach Anspruch 1,
**dadurch gekennzeichnet, dass**
das wärmedehnungsneutrale Material aus wärmedehnungsneutralem Faserverbundwerkstoff (49; 61, 63) gebildet ist.

3. Solargenerator (1) nach Anspruch 2,
**dadurch gekennzeichnet, dass**
der wärmedehnungsneutrale Faserverbundwerkstoff (49; 61, 63) einen im wesentlichen unidirektionalen Kohlenfaserkunststoff enthält.

4. Solargenerator (1) nach einem der voranstehenden Ansprüche,
**dadurch gekennzeichnet, dass**
das wärmedehnungsneutrale Material ein wärmedehnungsneutraler Stahl, insbesondere Invar-Stahl ist.

5. Solargenerator (1) nach einem der voranstehenden Ansprüche,
**dadurch gekennzeichnet, dass**
das wärmedehnungsneutrale Material der geschlossenen Seilschlaufe (41) in einem Bereich (48) zwischen den Umlenkrollen (16, 19) aus wärmedehnungsneutralen Stäben (49) gebildet ist.

6. Solargenerator (1) nach einem der voranstehenden Ansprüche,
**dadurch gekennzeichnet, dass**
das wärmedehnungsneutrale Material mit einem Seilmantel (50) umhüllt ist.

7. Solargenerator (1) nach Anspruch 6,
**dadurch gekennzeichnet, dass**
der umhüllende Seilmantel (50) aus Stahl gebildet ist und über die Enden des wärmedehnungsneutralen Materials (48) hinausragt (53), wobei nur dieser hinausragende Teil (53) um die die geschlossene Seilschlaufe (41; 61, 63) aufspannenden Umlenkrollen (16, 19) herum verläuft.

8. Solargenerator (1) nach einem der voranstehenden Ansprüche,
**dadurch gekennzeichnet, dass**
die Enden des wärmedehnungsneutralen Materials (48; 62, 63) als Befestigungsschlaufen (69) ausgebildet sind, die jeweils eine Schlinge (68) eines mit dem wärmedehnungsneutralen Material (48; 62, 63) verbundenen Seilstücks (64, 65) halten.

9. Solargenerator (1) nach einem der voranstehenden Ansprüche,
**dadurch gekennzeichnet, dass**
die geschlossene Seilschlaufe zumindest zwei wärmedehnungsneutrale Teile (52, 53; 62, 63) enthält, die jeweils an ihren freien Enden mit Seilstücken (64, 65) verbunden sind.

## Claims

1. A collapsible solar generator (1) comprising a plurality of solar panels (5, 6, 7, 8), which for a deployment operation are pivotable relative to one another, and at least one closed cable loop (41, 61) for transferring a rotational movement for synchronous deployment of the solar panels (5, 6, 7, 8), wherein the closed cable loop (41, 61) is mounted on two guide pulleys (16, 19; 18, 20),
**characterized in that**
at least the predominant part of the closed cable loop (41, 61) between the guide pulleys (16, 19; 18, 20), on which the closed cable loop (41, 61) is mounted, is formed from a neutral thermal expansion material.

2. A solar generator (1) according to claim 1,
**characterized in that**
the neutral thermal expansion material is formed from neutral thermal expansion fibre composite (49; 61, 63).

3. A solar generator (1) according to claim 2,
**characterized in that**
the neutral thermal expansion fibre composite (49; 61, 63) comprises a substantially unidirectional carbon fibre plastic.

4. A solar generator (1) according to one of the preceding claims,
**characterized in that**
the neutral thermal expansion material is a neutral thermal expansion steel, in particular invar steel.

5. A solar generator (1) according to one of the preceding claims,
**characterized in that**
the neutral thermal expansion material of the closed cable loop (41) in a region (48) between the guide pulleys (16, 19) is formed from neutral thermal expansion rods (49).

6. A solar generator (1) according to one of the preceding claims,
**characterized in that**
the neutral thermal expansion material is encased by a cable sheath (50).

7. A solar generator (1) according to claim 6,
**characterized in that**
the encasing cable sheath (50) is formed from steel and projects (53) beyond the ends of the neutral thermal expansion material (48), wherein only this projecting part (53) extends around the guide pulleys (16, 19), on which the closed cable loop (41; 61, 63) is mounted.

8. A solar generator (1) according to one of the preceding claims,
**characterized in that**
the ends of the neutral thermal expansion material (48; 62, 63) are designed as fastening loops (69), which each hold a looped portion (68) of a cable piece (64, 65) connected to the neutral thermal expansion material (48; 62, 63).

9. A solar generator (1) according to one of the preceding claims,
**characterized in that**
the closed cable loop comprises at least two neutral thermal expansion parts (52, 53; 62, 63), which are connected in each case at their free ends to cable pieces (64, 65).

## Revendications

1. Générateur solaire (1) pliable doté de plusieurs panneaux solaires (5, 6, 7, 8) inclinables les uns par rapport aux autres pour un processus de déploiement et d'au moins une élingue (41, 61) fermée pour transférer un mouvement de rotation afin d'assurer le déploiement synchrone des panneaux solaires (5, 6, 7, 8), l'élingue fermée (41, 61) étant tendue par deux poulies de guidage (16, 19 ;18, 20),
**caractérisé en ce que**
au moins la partie prépondérante de l'élingue fermée (41, 61) entre les poulies de guidage (16, 19 ; 18, 20) tendant l'élingue fermée (41, 61) se compose d'une matière à dilatation thermique neutre.

2. Générateur solaire (1) selon la revendication 1,
**caractérisé en ce que**
la matière à dilatation thermique neutre se compose de matériau composite à dilatation thermique neutre et renforcé par des fibres (49 ; 61, 63).

3. Générateur solaire (1) selon la revendication 2,
**caractérisé en ce que**
le matériau composite à dilatation thermique neutre et renforcé par des fibres (49 ; 61, 63) comporte une matière synthétique à fibre carbonifère principalement unidirectionnelle.

4. Générateur solaire (1) selon l'une quelconque des revendications précédentes,
**caractérisé en ce que**
la matière à dilatation thermique neutre est un acier à dilatation thermique neutre et notamment un acier invar.

5. Générateur solaire (1) selon l'une quelconque des revendications précédentes,
**caractérisé en ce que**
la matière à dilatation thermique neutre de l'élingue fermée (41) est formée dans une zone (48) située entre les poulies de guidage (16, 19) en barres à dilatation neutre (49).

6. Générateur solaire (1) selon l'une quelconque des revendications précédentes,
**caractérisé en ce que**
la matière à dilatation thermique neutre est enveloppée d'un chemisage de câble (50).

7. Générateur solaire (1) selon la revendication 1,
**caractérisé en ce que**
le chemisage de câble (50) enveloppant est en acier et dépasse (53) au-delà des extrémités de la matière à dilatation thermique neutre (48), seule cette partie dépassante (53) tournant autour des poulies de guidage (16, 19) tendant l'élingue fermée (41 ; 61, 63).

8. Générateur solaire (1) selon l'une quelconque des revendications précédentes,
**caractérisé en ce que**
les extrémités de la matière à dilatation thermique neutre (48 ; 62, 63) sont formées en tant que boucles de fixation (69) qui maintiennent chacune une coque (68) d'une pièce de câble (64, 65) reliée à la matière à dilatation neutre (48 ; 62, 63).

9. Générateur solaire (1) selon l'une quelconque des revendications précédentes,
**caractérisé en ce que**
l'élingue fermée comporte au moins deux pièces à dilatation thermique neutre (52, 53 ; 62, 63) qui sont reliées respectivement à des pièces de câble (64, 65) au niveau de leurs extrémités libres.
